# EUROPÄISCHE PATENTANMELDUNG

(11) **EP 4 046 739 A1**
(43) Veröffentlichungstag der Anmeldung: **24.08.2022**
(21) Anmeldenummer: 21212410.1
(22) Anmeldetag: 04.12.2021
(51) Int. Cl.: B23K 15/00, B23K 26/03, B23K 26/244, B23K 26/08, B23K 26/60, H01M 8/0297, H01M 8/0254, B23K 101/16

(54) **VERFAHREN ZUM VERSCHWEISSEN VON ZWEI LÄNGLICHEN MATERIALBÄNDERN**

(30) Priorität: 18.02.2021 DE 102021103840
(71) Anmelder: a.i.m. all in metal GmbH, 09514 Pockau-Lengefeld (DE)
(72) Erfinder: Lippmann, Eckart, 09235 Burkhardtsdorf (DE)
(74) Vertreter: Pelster Behrends Patentanwälte PartG mbB

(57) **Zusammenfassung**

Die Erfindung betrifft ein Verfahren zum Verschweißen von zwei länglichen Materialbändern (100a, 100b), insbesondere zur Herstellung von Bipolarplatten für Brennstoffzellen, mit den Schritten: Fördern der länglichen Materialbänder (100a, 100b) mittels einer Fördereinrichtung (18) durch einen Erfassungsbereich (E), Erfassen potentieller Schweißbereiche (118a-118d, 120a, 120b), in welchen die Materialbänder (100a, 100b) miteinander zu verschweißen sind, wobei das Erfassen der potentiellen Schweißbereiche (118a-118d, 120a, 120b) innerhalb des Erfassungsbereichs (E) und mittels einer sensorischen Erfassungseinrichtung (28) erfolgt, und Erzeugen von die Materialbänder (100a, 100b) miteinander verbindenden Schweißnähten (110, 110a-110c) in von der Erfassungseinrichtung (28) erfassten potentiellen Schweißbereichen (118a-118d, 120a, 120b) mittels zumindest eines von einer Schweißeinrichtung (14, 14a-14c) erzeugten Schweißstrahls (16, 16a-16c).

## Beschreibung

Die Erfindung betrifft ein Verfahren zum Verschweißen von zwei länglichen Materialbändern, insbesondere zur Herstellung von Bipolarplatten für Brennstoffzellen, mit dem Schritt: Fördern der länglichen Materialbänder mittels einer Fördereinrichtung durch einen Erfassungsbereich.

Ferner betrifft die Erfindung eine Vorrichtung zum Verschweißen von zwei länglichen Materialbändern, insbesondere zur Herstellung von Bipolarplatten für Brennstoffzellen, mit einer Fördereinrichtung zum Fördern der länglichen Materialbänder durch einen Erfassungsbereich.

In einer Vielzahl von unterschiedlichen Anwendungsfällen ist das Verschweißen von zwei länglichen Materialbändern erforderlich. Besondere Anwendungsfälle ergeben sich in der Großserienfertigung von Produkten und Geräten, in welchen Schweißkonstruktionen verbaut sind.

In diesem Zusammenhang kann beispielsweise die Brennstoffzellenproduktion genannt werden. Aufgrund der wachsenden Nachfrage an Brennstoffzellen wird auch eine steigende Anzahl von Bipolarplatten benötigt, welche in den Brennstoffzellenstacks zum Einsatz kommen. Eine Bipolarplatte ist eine mehrteilige Baugruppe und besteht aus zwei stoffschlüssig gefügten Halbplatten, wobei eine der Halbplatten als Anode und eine der Halbplatten als Kathode fungiert. Zwischen den Halbplatten zirkuliert ein Kühlmedium.

Die bekannten Schweißverfahren sind aufgrund der vergleichsweise langen Prozessdauer nicht für die Großserienherstellung von Brennstoffzellen mit geschweißten Bipolarplatten geeignet.

Die der Erfindung zugrundeliegende Aufgabe besteht somit darin, das Verschweißen von zwei Materialbändern, insbesondere zum Herstellen von verschweißten Bipolarplatten, zu beschleunigen.

Die Aufgabe wird gelöst durch ein Verfahren der eingangs genannten Art, wobei im Rahmen des erfindungsgemäßen Verfahrens potentielle Schweißbereiche, in welchen die Materialbänder miteinander zu verschweißen sind, erfasst werden und das Erfassen der potentiellen Schweißbereiche innerhalb des Erfassungsbereichs und mittels einer sensorischen Erfassungseinrichtung erfolgt. Erfindungsgemäß werden dann in von der Erfassungseinrichtung erfassten potentiellen Schweißbereichen mittels zumindest eines von einer Schweißeinrichtung erzeugten Schweißstrahls Schweißnähte erzeugt, welche die Materialbänder miteinander verbinden.

Im Rahmen der Erfindung erfolgt also eine selbsttätige Erfassung und Identifikation von Schweißbereichen, sodass eine exakte Positionierung des Schweißstrahls in Bezug auf die Materialbänder vor und während des Schweißvorgangs erfolgen kann. Dadurch, dass die potentiellen Schweißbereiche vor dem Erzeugen der Schweißnähte mittels einer Erfassungseinrichtung erfasst werden, wird eine Fehlschweißung aufgrund einer Fehlpositionierung der Materialbänder in Bezug auf den Schweißstrahl effektiv vermieden. Ferner wird der Aufwand für die Konfiguration der Fördereinrichtung und der Schweißeinrichtung erheblich verringert, da die Führung des Schweißstrahls in Abhängigkeit der zuvor erfassten potentiellen Schweißbereiche erfolgt. Ferner führen Unregelmäßigkeiten und Maßabweichungen an den länglichen Materialbändern nicht länger zu einer dauerhaften Fehlkonfiguration der zum Verschweißen verwendeten Vorrichtung, da die potentiellen Schweißbereiche vor dem eigentlichen Schweißvorgang mittels der Erfassungseinrichtung erfasst werden.

Die länglichen Materialbänder können während des Förderns vor dem Erreichen des Erfassungsbereichs mittels einer Umlenkeinrichtung umgelenkt werden. Die Umlenkeinrichtung kann beispielsweise eine Umlenkwalze sein. Vorzugsweise wird ein erstes Materialband von einer ersten Umlenkwalze umgelenkt und ein zweites Materialband wird von einer zweiten Umlenkwalze umgelenkt. Die Umlenkung kann spiegelsymmetrisch erfolgen. Die beiden Umlenkwalzen können gleich groß ausgebildet sein bzw. einen übereinstimmenden Walzendurchmesser aufweisen. Die Umlenkwalzen können frei drehend ausgebildet sein oder rotierend angetrieben werden. Falls die Umlenkwalzen rotierend angetrieben werden, unterstützen diese vorzugsweise den Förderprozess der Materialbänder. Die Umlenkrollen können auch Bestandteil der Fördereinrichtung sein.

Die Materialbänder werden vor dem Verschweißen mittels des zumindest einen Schweißstrahls in den potentiellen Schweißbereichen spaltfrei zueinander positioniert. In den potentiellen Schweißbereichen liegen die Materialbänder also unmittelbar übereinander, wobei die Oberflächen der Materialbänder sich in dem potentiellen Schweißbereich berühren. Hierzu kann die verwendete Vorrichtung eine Spannvorrichtung zum Spannen der Materialbänder aufweisen. Die Spannvorrichtung kann eine oder mehrere Spannrollen, Spannwalzen und/oder Gleitschienen umfassen, welche in Kontakt mit zumindest einem der Materialbänder stehen. Die Spannvorrichtung bringt beispielsweise durch Umlenken der Materialbänder eine Bandspannung in die Materialbänder ein, wodurch die Materialbänder zumindest in den potentiellen Schweißbereichen spaltfrei zueinander positioniert werden.

Die Schweißeinrichtung kann eine Laserschweißeinrichtung oder Elektronenstrahlschweißeinrichtung sein. Der Schweißstrahl kann demnach ein Laserschweißstrahl oder ein Elektronenschweißstrahl sein. Beispielsweise kann die Schweißeinrichtung einen Single-Mode-Laser und/oder einen Positionierscanner umfassen. Die die Materialbänder miteinander verbindenden Schweißnähte können auch durch mehrere, beispielsweise nebeneinander, parallel zueinander oder hintereinander angeordnete, Schweißeinrichtungen erzeugt werden. Durch die Verwendung von mehreren Schweißeinrichtungen kann die Durchsatzgeschwindigkeit weiter gesteigert werden.

Die Erzeugung der Schweißnähte erfolgt vorzugsweise außerhalb des Erfassungsbereichs. Insbesondere trifft der Schweißstrahl in einer von dem Erfassungsbereich beabstandeten Schweißzone auf die Oberfläche eines Materialbandes. Die potentiellen Schweißbereiche werden also im dem Erfassungsbereich erfasst, wobei die Schweißnahterzeugung in den Schweißbereichen in der auf den Erfassungsbereich folgenden Schweißzone erfolgt.

In einer bevorzugten Ausführungsform des erfindungsgemäßen Verfahrens erfolgt das Erfassen potentieller Schweißbereiche und/oder das Erzeugen der die Materialbänder miteinander verbindenden Schweißnähte kontinuierlich während des Förderns der länglichen Materialbänder. Bei dem Schweißvorgang handelt es sich somit um ein Durchlaufverfahren, bei welchem die Schweißnahterzeugung erfolgt, währenddessen die länglichen Materialbänder mittels der Fördereinrichtung gefördert werden. Die Materialbänder führen folglich während des stoffschlüssigen Fügens mittels des zumindest einen Schweißstrahls eine Förderbewegung, insbesondere in Richtung ihrer Längsachse, aus. Die Schweißnahterzeugung erfolgt folglich zumindest temporär während des Fördervorgangs, sodass keine Unterbrechung des Fördervorgangs für die Erzeugung der Schweißnähte erforderlich ist. Wenn der Schweißstrahl und somit der Auftreffpunkt des Schweißstrahls nicht bewegt werden, führt die Förderbewegung der Materialbänder zur Erzeugung einer Schweißnaht, welche in Längsrichtung der Materialbänder verläuft. Ferner kann der Schweißstrahl während des Schweißvorgangs quer zur Längsachse der Materialbänder bewegt und/oder verschwenkt werden. Durch ein Bewegen und/oder Verschwenken des zumindest einen Schweißstrahls wird der Auftreffpunkt des Schweißstrahls quer zur Längsachse der Materialbänder bewegt. Dadurch, dass der Auftreffpunkt des Schweißstrahls quer zur Längsachse bewegt wird, wird eine Schweißnaht erzeugt, welche quer oder schräg zur Längsachse der Materialbänder verläuft. Das Bewegen des Schweißstrahls kann beispielsweise durch Bewegen der Schweißeinrichtung, insbesondere quer zur Längsachse der Materialbänder, erfolgen. Das Verschwenken des zumindest einen Schweißstrahls kann beispielsweise durch eine Neigungsänderung oder ein Verfahren eines Umlenkspiegels der Schweißeinrichtung erfolgen. Ferner kann der zumindest eine Schweißstrahl durch Bewegen und/oder Verschwenken einer Linse oder einer Linsenanordnung der Schweißeinrichtung erfolgen.

In einer anderen bevorzugten Ausführungsform des erfindungsgemäßen Verfahrens sind die Fördereinrichtung, die Erfassungseinrichtung und/oder die Schweißeinrichtung signalleitend mit einer Steuerungseinrichtung verbunden, wobei die Steuerungseinrichtung die Schweißeinrichtung vorzugsweise in Abhängigkeit der Signale der Fördereinrichtung und/oder der Erfassungseinrichtung steuert. Das Steuern der Schweißeinrichtung erfolgt vorzugsweise in Echtzeit und/oder umfasst das Einstellen eines Bewegungsmusters und/oder das Einstellen einer Bewegungsgeschwindigkeit des Schweißstrahls. Das Steuern der Schweißeinrichtung kann beispielsweise das Verfahren oder Verschwenken der Schweißeinrichtung und/oder das Verfahren oder Verschwenken einer Linse oder einer Linsenanordnung der Schweißeinrichtung umfassen. Durch das Steuern der Schweißeinrichtung kann der Auftreffpunkt des Schweißstrahls in Längs- und/oder in Querrichtung verändert werden. Die Schweißeinrichtung kann in Abhängigkeit der Fördergeschwindigkeit der länglichen Materialbänder und/oder in Abhängigkeit der Position, der Größe und/oder der Form der erfassten potentiellen Schweißbereiche gesteuert werden. Insbesondere bei hohen Schweißgeschwindigkeiten kann eine adaptive Anpassung der Schweißparameter an die Fördergeschwindigkeit, also die Bewegungsgeschwindigkeit der Materialbänder, erfolgen.

Es ist darüber hinaus ein erfindungsgemäßes Verfahren vorteilhaft, bei welchem die Erfassungseinrichtung die Positionen, die Formen und/oder die Größen der potentiellen Schweißbereiche erfasst, wobei die Schweißeinrichtung die die Materialbänder miteinander verbindenden Schweißnähte vorzugsweise in Abhängigkeit der von der Erfassungseinrichtung erfassten Positionen, Formen und/oder Größen der potentiellen Schweißbereiche erzeugt. Somit kann eine exakte Positionierung der Schweißnähte anhand der erfassten Positionen der potentiellen Schweißbereiche erfolgen. Der Schweißprozess wird also adaptiv an die vorherrschenden Lagebedingungen angepasst. Die Auswahl, Ausrichtung und/oder Größe des Schweißnahtmusters, welches durch den zumindest einen Schweißstrahl erzeugt wird, kann in Abhängigkeit der Form und/oder Größe des erfassten potentiellen Schweißbereichs durch die Steuerungseinrichtung festgelegt werden. Somit kann beispielsweise in potentiellen Schweißbereichen, deren Größe unterhalb eines Größengrenzwerts liegt, jeweils ein erstes Schweißnahtmuster und in potentiellen Schweißbereichen, deren Größe oberhalb des Größengrenzwerts liegt, jeweils ein zweites Schweißnahtmuster erzeugt werden, wobei sich das erste Schweißnahtmuster von dem zweiten Schweißnahtmuster unterscheidet. Die Steuerungseinrichtung nimmt somit eine adaptive Anpassung der Schweißnahtkontur in Abhängigkeit der Eigenschaften der potentiellen Schweißbereiche vor.

Darüber hinaus ist ein erfindungsgemäßes Verfahren vorteilhaft, bei welchem die Erfassungseinrichtung den Kontaktzustand zwischen den Materialbändern in den potentiellen Schweißbereichen erfasst und die Schweißeinrichtung die Erzeugung von Schweißnähten in potentiellen Schweißbereichen auslässt, in welchen der erfasste Kontaktzustand zwischen den Materialbändern außerhalb eines Toleranzbereichs liegt. Die Erfassungseinrichtung kann also einen mangelhaften Kontaktzustand zwischen den Materialbändern in potentiellen Schweißbereichen erfassen, wodurch nicht-fügefähige potentielle Schweißbereiche identifiziert werden können. Da der Schweißvorgang in nicht-fügefähigen Schweißbereichen zu einer Beschädigung der Schweißbaugruppe führen kann, veranlasst die Steuerungseinrichtung, dass in nicht-fügefähigen potentiellen Schweißbereichen keine Schweißnaht erzeugt wird. Das Erfassen des Kontaktzustands zwischen den Materialbändern kann ein Untersuchen des Spannzustands der Materialbändern in den potentiellen Schweißbereichen umfassen. Bei dem beabsichtigten Schweißvorgang werden die beiden Materialbänder zumindest in den potentiellen Schweißbereichen spaltfrei zueinander positioniert, beispielsweise durch eine oder mehrere Spannrollen. Durch Maßungenauigkeiten oder ein Verrutschen eines Materialbandes kann es jedoch vorkommen, dass die Materialbänder in den potentiellen Schweißbereichen nicht spaltfrei zueinander positioniert sind, wodurch sich eine mangelnde Fügefähigkeit ergibt. Mittels der Erfassungseinrichtung kann also sichergestellt werden, dass die Schweißnahterzeugung auch nur in fügefähigen Schweißbereichen erfolgt. Die von der Erfassungseinrichtung erfassten Kontaktzustände der Materialbänder in den potentiellen Schweißbereichen werden mit einem Soll-Kontaktzustand, insbesondere mit einem Soll-Spannzustand, verglichen. Die Steuerungseinrichtung veranlasst die Erzeugung einer die Materialbänder miteinander verbindenden Schweißnaht in einem potentiellen Schweißbereich, wenn der Kontaktzustand in einem Sollbereich liegt. Die Steuerungseinrichtung lässt die Erzeugung einer die Materialbänder miteinander verbindenden Schweißnaht in einem potentiellen Schweißbereich aus, wenn der Kontaktzustand außerhalb des Sollbereichs liegt. Damit wird die Erzeugung von mangelhaften Schweißnähten verhindert. In den betroffenen Schweißbereichen, in welchen keine Schweißnaht erzeugt wird, kann eine nachträgliche manuelle Schweißnahterzeugung erfolgen. Vorzugsweise wird die Position des potentiellen Schweißbereichs, in welchem die Schweißnahterzeugung ausgelassen wird, gespeichert und/oder ausgegeben. Ein Schweißer kann diese Positionsdaten im Nachgang verwenden, um die Bereiche aufzufinden, an welchen eine nachträgliche manuelle Schweißnahterzeugung erforderlich ist.

Das erfindungsgemäße Verfahren wird ferner dadurch vorteilhaft weitergebildet, dass eine Steuerungseinrichtung beim Auslassen einer Schweißnahterzeugung in potentiellen Schweißbereichen, insbesondere anhand der Position des potentiellen Schweißbereichs, beurteilt, ob eine nachträgliche Erzeugung einer Schweißnaht in dem potentiellen Schweißbereich möglich und/oder erforderlich ist. Die ungünstigen, nicht verschweißbaren Schweißbereiche werden also unter Betrachtung von deren Position ausgelassen. Wenn die Erzeugung einer Schweißnaht in dem potentiellen Schweißbereich nicht möglich, aber erforderlich ist, dann muss die Schweißbaugruppe als nicht in Ordnung (n.i.O.) bewertet werden, sodass die Baugruppe auszusortieren ist. Wenn die nachträgliche Erzeugung einer Schweißnaht in dem potentiellen Schweißbereich nicht erforderlich ist, kann die Baugruppe trotz des ausgelassenen Schweißvorgangs in einem Schweißbereich als in Ordnung (i.O.) bewertet werden. Eine Aussortierung der Baugruppe ist nicht erforderlich. Liegen beispielsweise nicht umsetzbare Schweißnähte im Bereich eines Flowfields einer Bipolarplatte, so kann die Baugruppe unter Umständen trotzdem als in Ordnung (i.O.) bewertet werden, sodass der weitere Prozess fortgeführt werden kann. Wenn eine nachträgliche Erzeugung einer Schweißnaht in dem potentiellen Schweißbereich möglich und erforderlich ist, kann die Schweißbaugruppe einer manuellen Nachbearbeitung zugeführt werden, in welcher ein Schweißer die zuvor ausgelassenen Schweißnähte manuell erzeugt. Liegen nicht umsetzbare Schweißnähte jedoch im Bereich von Dichtnähten, so muss das Bauteil aus dem Herstellungsprozess ausgeschleust werden. Falls keine manuelle Nachschweißung möglich ist, ist die Baugruppe vorzeitig als nicht in Ordnung (n.i.O.) zu bewerten und somit in Folge eines kritischen Schweißnahtfehlers auszusondern. Es ist eine vergleichsweise schnelle Daten- und Signalübertragung an die Schweißsteuerung notwendig, damit das Auslassen einer Schweißnahterzeugung in potentiellen Schweißbereichen möglich ist und die Realisierbarkeit einer nachträglichen Schweißnahterzeugung beurteilt werden kann.

In einer anderen bevorzugten Ausführungsform des erfindungsgemäßen Verfahrens ermittelt die Erfassungseinrichtung zum Erfassen potentieller Schweißbereiche die Temperatur einer Oberfläche zumindest eines Materialbandes. Die Erfassung der potentiellen Schweißbereiche erfolgt also thermografiebasiert. Die Erfassungseinrichtung kann eine oder mehrere Wärmebildkameras umfassen. Mittels der Erfassungseinrichtung kann eine Mustererkennung in der Wärmesignatur der Oberfläche zumindest eines Materialbandes erfolgen. Die Erfassungseinrichtung erfasst vorzugsweise die Intensität der von der Oberfläche des zumindest einen Materialbandes ausgehenden Infrarotstrahlung und ermittelt daraus dessen Temperatur. Beispielsweise können potentielle Schweißbereiche dadurch erkannt werden, dass die Temperatur der Oberfläche des zumindest einen Materialbandes in diesem Bereich innerhalb eines Temperaturbereichs oder oberhalb eines Temperaturgrenzwerts liegt. Beispielsweise soll die Schweißnahterzeugung in warmen Materialbereichen erfolgen, wobei kalte Materialbereiche keine potentiellen Schweißbereiche sind.

Es ist darüber hinaus ein erfindungsgemäßes Verfahren vorteilhaft, bei welchem vor dem Erfassungsbereich der Erfassungseinrichtung ein Wärmeeintrag in die Materialbänder erfolgt. Vorzugsweise erfolgt der Wärmeeintrag in die Materialbänder von einer der Erfassungseinrichtungen abgewandten Seite der Materialbänder aus. Beispielsweise erfolgt der Wärmeeintrag in ein Materialband, wobei die Erfassungseinrichtung die Oberflächentemperatur des anderen Materialbandes erfasst. Da in den potentiellen Schweißbereichen die Materialbänder spaltfrei aufeinander liegen, kommt es auch zu einer zügigen Erwärmung des Materialbandes, dessen Temperatur von der Erfassungseinrichtung erfasst wird. Außerhalb der potentiellen Schweißbereiche liegen die Materialbänder nicht spaltfrei aufeinander, vielmehr befindet sich zwischen den Materialbändern außerhalb der potentiellen Schweißbereiche ein Luftspalt. Aufgrund des Luftspalts zwischen den Materialbändern erfolgt die Erwärmung des Materialbandes, dessen Temperatur von der Erfassungseinrichtung erfasst wird, außerhalb der potentiellen Schweißbereiche verzögert. Aus dem sich daraus ergebenden Temperaturmuster können die Positionen, Größen und/oder Formen der potentiellen Schweißbereiche ermittelt werden. Der Wärmeeintrag kann beispielsweise über eine Heizeinrichtung erfolgen. Beispielsweise erfolgt der Wärmeeintrag in die Materialbänder über eine beheizte Walze oder eine Wärmewalze. Alternativ oder zusätzlich kann die Heizeinrichtung ein beheiztes Gleitblech umfassen, welches mit zumindest einem Materialband in Kontakt steht und über welches Wärme in die Materialbänder eingebracht werden kann. Alternativ oder zusätzlich kann der Wärmeeintrag in die Materialbänder durch eine Strahlungsheizung erfolgen, welche den Wärmeeintrag in die Materialbänder durch Bestrahlung realisiert.

Das erfindungsgemäße Verfahren wird ferner dadurch vorteilhaft weitergebildet, dass die Erfassungseinrichtung zum Erfassen potentieller Schweißbereiche kamerabasiert die Struktur einer Oberfläche zumindest eines Materialbandes ermittelt. Die Erfassungseinrichtung umfasst folglich eine oder mehrere Kameras. Die eine oder die mehreren Kameras stellen Bildaufnahmen bereit, aus welchen die Positionen, Formen und/oder Größen potentieller Schweißbereiche abgeleitet werden können. Die eingesetzte Vorrichtung kann ferner eine Beleuchtungseinrichtung aufweisen, über welche der Erfassungsbereich der Erfassungseinrichtung beleuchtet werden kann. Durch die Beleuchtung des Erfassungsbereichs kann die Qualität der Bildaufnahmen verbessert werden. Ferner kann durch eine Beleuchtung ein Schattenmuster auf der Oberfläche des angeleuchteten Materialbandes erzeugt werden, welches zur Ermittlung der Oberflächenstruktur ausgewertet werden kann.

In einer anderen bevorzugten Ausführungsform des erfindungsgemäßen Verfahrens wertet die Erfassungseinrichtung zum Erfassen potentieller Schweißbereiche Bildaufnahmen der Oberfläche zumindest eines Materialbandes aus. Vorzugsweise führt die Erfassungseinrichtung eine Mustererkennung durch, um auf Grundlage der Mustererkennung potentielle Schweißbereiche zu identifizieren. Im Rahmen der Mustererkennung kann auch ein Abgleich erfasster Oberflächenstrukturen mit potentiellen Schweißbereichsformen erfolgen, sodass auf Grundlage dieses Abgleichs potentielle Schweißbereiche identifiziert werden können.

Es ist darüber hinaus ein erfindungsgemäßes Verfahren vorteilhaft, bei welchem die Materialbänder vorgeprägte Blechbänder sind. Alternativ können die Materialbänder auch Metallfolien sein. Ein Materialband oder beide Materialbänder können eine Prägung aufweisen, welche beispielsweise durch Hohlprägen in einer Presse erzeugt wurde.

In einer anderen bevorzugten Ausführungsform des erfindungsgemäßen Verfahrens trifft der zumindest eine von der Schweißeinrichtung erzeugte Schweißstrahl zumindest temporär orthogonal auf die Oberfläche zumindest eines Materialbandes. Der Schweißstrahl sorgt vorzugsweise für eine lokale Materialaufschmelzung an beiden Materialbändern, sodass im Übergangsbereich zwischen den Materialbändern eine die Materialbänder miteinander verbindende Schweißnaht erzeugt wird. Die Erzeugung der Schweißnaht, beispielsweise einer Quernaht, einer Längsnaht oder einer schräg verlaufenden Schweißnaht, kann durch ein kontinuierliches Schweißen mit Dauerstrich erfolgen. Alternativ kann die Schmelzbaderzeugung durch eine Strahlbewegung erfolgen. Diese Strahlbewegung, also die Bewegung des Schweißstrahls, kann beispielsweise durch Schwingstrahlschweißen, insbesondere Wobbeln, oder durch Pulsen erreicht werden. Das Wobbeln eignet sich besonders gut zur Spaltüberbrückung. Beim Schwingstrahlschweißen, insbesondere beim Wobbeln, ist die Schweißeinrichtung vorzugsweise eine Laserschweißeinrichtung und der Schweißstrahl ist ein Laserschweißstrahl. Alternativ oder zusätzlich kann die Schmelzbaderzeugung durch Springstrahlschweißen erfolgen. Beim Springstrahlschweißen werden mehrere Schmelzbäder mit einem Schweißstrahl offen gehalten, sodass mit nur einem Schweißstrahl gleichzeitig mehrere voneinander beabstandete Schweißbäder, insbesondere für voneinander beabstandete Längsnähte, erzeugt werden können. Beim Springstrahlschweißen ist die Schweißeinrichtung vorzugsweise eine Elektronenstrahlschweißeinrichtung und der Schweißstrahl ist ein Elektronenschweißstrahl.

In einer anderen bevorzugten Ausführungsform des erfindungsgemäßen Verfahrens umfassen die erzeugten Schweißnähte sich überlappende und/oder sich kreuzende Schweißnahtverläufe. Es werden folglich keine durchlaufenden Schweißnähte, sondern mehrere, sich überlappende und/oder sich kreuzende Einzelschweißnähte in die Materialbänder eingebracht. Durch derartige Schweißnahtverläufe wird der Wärmeeintrag während des Schweißvorgangs verringert, wodurch die Qualität und Festigkeit der Schweißverbindungen verbessert wird. Die mittels des Schweißstrahls erzeugten Schweißnahtmuster können offene oder geschlossenen Nahtmuster sein. Die Schweißnähte können beispielsweise Mikrosteppnähte sein. Die Schweißnähte können sich überlappende Kreise, Ovale oder Kringel sein. Ferner können die Schweißnähte eine ineinander verschlungene Form aufweisen, wie etwa die Form eines Notenschlüssels oder eine Brezelform. Außerdem können die Schweißnähte eine Zickzack- oder Sägezahnform aufweisen.

Im Rahmen des erfindungsgemäßen Verfahrens können die zwei länglichen Materialbänder auch an zwei voneinander beabstandeten Schweißstationen der verwendeten Vorrichtung miteinander verschweißt werden, wobei die Schweißnähte in den beiden Schweißstationen in unterschiedlicher Weise erzeugt werden. An einer ersten Schweißstation erfolgt die Schweißnahterzeugung auf eine erste Weise und an einer zweiten Schweißstation, welche beabstandet von der ersten Schweißstation positioniert ist, erfolgt die Schweißnahterzeugung auf eine zweite und andere Weise.

An der zweiten Schweißstation werden die Materialbänder beispielsweise mittels eines Verfahrens gemäß einer der vorstehend beschriebenen Ausführungsformen verschweißt.

An der ersten Schweißstation wird zumindest ein längliches Materialband mittels einer Umlenkeinrichtung während des Förderns umgelenkt, um die länglichen Materialbändern übereinander zu positionieren, wobei zueinander gewandte Innenflächen der Materialbänder durch das Umlenken des zumindest einen Materialbandes in einem Kontaktbereich in Kontakt miteinander gebracht werden. Dann erfolgt ein stoffschlüssiges Fügen der Materialbänder mittels zumindest eines Schweißstrahls, wobei der zumindest eine Schweißstrahl in einer in dem Kontaktbereich liegenden Schweißzone auf die zueinander gewandten Innenflächen der übereinander positionierten Materialbänder trifft und an dem Auftreffpunkt eine Materialaufschmelzung an den zueinander gewandten Innenflächen der Materialbänder verursacht. Durch das Umlenken des zumindest einen länglichen Materialbandes werden die zwei länglichen Materialbänder unmittelbar übereinander positioniert. In dem entstehenden Kontaktbereich werden die durch den zumindest einen Schweißstrahl aufgeschmolzenen Materialbereiche der zueinander gewandten Innenflächen der übereinander angeordneten Materialbänder aufeinandergepresst, sodass es zur Schweißnahtbildung kommt. Die zueinander gewandten Innenflächen der Materialbänder können im Kontaktbereich eine sich quer zur Längsrichtung der Materialbänder verlaufende Kontaktlinie bilden, wobei der zumindest eine Schweißstrahl in der Kontaktlinie auf die Innenflächen der Materialbänder auftrifft. Dadurch, dass die Materialaufschmelzung lokal an den zueinander gewandten Innenflächen der Materialbänder erfolgt, ist der erforderliche Wärmeeintrag in die Materialbänder vergleichsweise gering, sodass ein Schweißprozess mit einer hohen Energieeffizienz erreicht wird. Da lediglich die Kontaktbereiche zu erwärmen sind, erfolgt die Schweißnahterzeugung auch vergleichsweise zügig, sodass auch komplexe Schweißmuster mit einem vergleichsweise geringen Zeitaufwand realisiert werden können.

Durch das Umlenken des zumindest einen länglichen Materialbandes ergibt sich zwischen den zueinander gewandten Innenflächen der Materialbänder ein keilförmiger Öffnungsbereich, welcher in Richtung des Kontaktbereichs zuläuft.

An der ersten Schweißstation wird der zumindest eine Schweißstrahl durch zumindest eine Schweißeinrichtung erzeugt. Die Schweißeinrichtung kann eine Laserschweißeinrichtung oder Elektronenstrahlschweißeinrichtung sein. Der Schweißstrahl kann demnach ein Laserschweißstrahl oder ein Elektronenschweißstrahl sein. Beispielsweise kann die Schweißeinrichtung einen Single-Mode-Laser und/oder einen Positionierscanner umfassen.

Die sich gegenseitig berührenden Kontaktabschnitte der Innenflächen der Materialbänder sind in dem Kontaktbereich spaltfrei zueinander positioniert. Das Verschweißen mittels des zumindest einen Schweißstrahls erfolgt vorzugsweise mediendicht, also flüssigkeitsdicht und/oder gasdicht.

Durch das Umlenken des zumindest einen Materialbandes werden die beiden Materialbänder an der ersten Schweißstation vorzugsweise parallel zueinander ausgerichtet. Vorzugsweise werden beide Materialbänder mittels einer Umlenkeinrichtung umgelenkt. Beispielsweise stellt ein Materialband ein oberes Materialband dar, wobei das andere Materialband ein unteres Materialband darstellt. Im Umlenkbereich laufen die Materialbänder aufeinander zu, bevor diese nach Passieren des Kontaktbereichs parallel zueinander verlaufen.

Das zumindest eine Materialband wird durch die Umlenkeinrichtung vorzugsweise unter elastischer Verformung umgelenkt. Insbesondere führt die Umlenkung zu keiner oder lediglich zu einer geringfügigen plastischen Verformung des Materialbandes. Die Umlenkeinrichtung kann beispielsweise eine Umlenkwalze sein. Vorzugsweise wird ein erstes Materialband von einer ersten Umlenkwalze umgelenkt und ein zweites Materialband wird von einer zweiten Umlenkwalze umgelenkt. Die Umlenkung kann spiegelsymmetrisch erfolgen. Die beiden Umlenkwalzen können gleich groß ausgebildet sein bzw. einen übereinstimmenden Walzendurchmesser ausweisen. Die Umlenkwalzen können frei drehend ausgebildet sein oder rotierend angetrieben werden. Falls die Umlenkwalzen rotierend angetrieben werden, unterstützen diese vorzugsweise den Förderprozess der Materialbänder.

In einer bevorzugten Ausführungsform des erfindungsgemäßen Verfahrens führen die Materialbänder an der ersten Schweißstation während des stoffschlüssigen Fügens mittels des zumindest einen Schweißstrahls eine Förderbewegung, insbesondere in Richtung ihrer Längsachse, aus. Die Schweißnahterzeugung erfolgt folglich zumindest temporär während des Fördervorgangs, sodass keine Unterbrechung des Fördervorgangs für die Erzeugung der Schweißnähte erforderlich ist. Vorzugsweise werden die Materialbänder während des stoffschlüssigen Fügens kontinuierlich bewegt. Wenn der Schweißstrahl und somit der Auftreffpunkt des Schweißstrahls nicht bewegt werden, führt die Förderbewegung der Materialbänder zur Erzeugung einer Schweißnaht, welche in Längsrichtung der Materialbänder verläuft. Die Materialbänder werden vorzugsweise mit einer übereinstimmenden Bandgeschwindigkeit gefördert.

Die Erzeugung einer Schweißnaht an der ersten Schweißstation, beispielsweise einer Quernaht, einer Längsnaht oder einer schräg verlaufenden Schweißnaht, kann durch ein kontinuierliches Schweißen mit Dauerstrich erfolgen. Alternativ kann die Schmelzbaderzeugung durch eine Strahlbewegung erfolgen. Diese Strahlbewegung, also die Bewegung des Schweißstrahls, kann beispielsweise durch Schwingstrahlschweißen, insbesondere Wobbeln, oder durch Pulsen erreicht werden. Das Wobbeln eignet sich besonders gut zur Spaltüberbrückung. Beim Schwingstrahlschweißen, insbesondere beim Wobbeln, ist die Schweißeinrichtung vorzugsweise eine Laserschweißeinrichtung und der Schweißstrahl ist ein Laserschweißstrahl. Alternativ oder zusätzlich kann die Schmelzbaderzeugung durch Springstrahlschweißen erfolgen. Beim Springstrahlschweißen werden mehrere Schmelzbäder mit einem Schweißstrahl offenhalten, sodass mit nur einem Schweißstrahl gleichzeitig mehrere voneinander beabstandete Schweißbäder, insbesondere für voneinander beabstandete Längsnähte, erzeugt werden können. Beim Springstrahlschweißen ist die Schweißeinrichtung vorzugsweise eine Elektronenstrahlschweißeinrichtung und der Schweißstrahl ist ein Elektronenschwei ßstrahl.

Das erfindungsgemäße Verfahren wird ferner dadurch vorteilhaft weitergebildet, dass der zumindest eine Schweißstrahl während des stoffschlüssigen Fügens an der ersten Schweißstation quer zur Längsachse der Materialbänder bewegt und/oder verschwenkt wird. Durch das Bewegen und/oder Verschwenken des zumindest einen Schweißstrahls wird der Auftreffpunkt des Schweißstrahls quer zur Längsachse der Materialbänder bewegt. Dadurch, dass der Auftreffpunkt des Schweißstrahls quer zur Längsachse bewegt wird, wird eine Schweißnaht erzeugt, welche quer oder schräg zur Längsachse der Materialbänder verläuft. Das Bewegen des Schweißstrahls kann beispielsweise durch Bewegen der Schweißeinrichtung, insbesondere quer zur Längsrichtung der Materialbänder, erfolgen. Das Verschwenken des zumindest einen Schweißstrahls kann beispielsweise durch eine Neigungsänderung oder ein Verfahren eines Umlenkspiegels der Schweißeinrichtung erfolgen. Ferner kann der zumindest eine Schweißstrahl durch Bewegen und/oder Verschwenken einer Linse oder einer Linsenanordnung der Schweißeinrichtung erfolgen.

In einer weiteren bevorzugten Ausführungsform des erfindungsgemäßen Verfahrens fördert die Fördereinrichtung die Materialbänder während des Fügens mit einer Bandgeschwindigkeit, wobei eine Steuerungseinrichtung das Bewegen und/oder Verschwenken des zumindest einen Schweißstrahls an der ersten Schweißstation in Abhängigkeit der Bandgeschwindigkeit veranlasst. Die Bandgeschwindigkeit kann während des Schweißvorgangs variieren. Beispielsweise kann die Steuerungseinrichtung auch eine Verringerung der Bandgeschwindigkeit oder eine Unterbrechung der Bandförderung veranlassen, wenn in Querrichtung verlaufende Schweißnähte erzeugt werden sollen. Beispielsweise ist in der Steuerungseinrichtung ein Schweißprogramm hinterlegt, welches eine Bewegungsroutine und/oder eine Schwenkroutine für den zumindest einen Schweißstrahl vorgibt, sodass ein vorgegebenes Schweißnahtmuster erzeugt wird.

In einer anderen bevorzugten Ausführungsform des erfindungsgemäßen Verfahrens werden in der ersten Schweißstation Schweißbereiche erfasst, in welchen die Materialbänder mittels des zumindest einen Schweißstrahls miteinander zu fügen sind. Das Erfassen der Schweißbereiche erfolgt über eine sensorische und/oder kamerabasierte Prüfung der Oberflächengeometrie der Materialbänder. Alternativ oder zusätzlich kann das Erfassen der Schweißbereiche auch über eine Thermographieprüfung erfolgen. In diesem Fall kann ein oder können beide Materialbänder vor dem Fügen erwärmt werden, beispielsweise durch eine Heizeinrichtung. Die Heizeinrichtung kann beispielsweise eine oder mehrere Heizflächen aufweisen, welche mit einem Materialband oder beiden Materialbändern in Kontakt stehen. Beispielsweise ist die Heizeinrichtung in die Umlenkeinrichtung integriert. Die Heizeinrichtung kann eine oder mehrere Heizrollen oder Heizwalzen umfassen. Alternativ kann die Heizeinrichtung auch berührungslos arbeiten, sodass das Erwärmen eines Materialbandes oder beider Materialbänder beispielsweise über Wärmestrahlung erfolgt. Mittels der eingebrachten Wärme kann über eine Thermographieprüfung beispielsweise die Oberflächengeometrie und/oder die Konturierung eines Materialbandes oder beider Materialbänder erfasst werden, sodass auf Grundlage der erfassten Oberflächengeometrie und/oder Konturierung Schweißbereiche ermittelt werden können. Die Steuerungseinrichtung veranlasst vorzugsweise das Bewegen und/oder Verschwenken des Schweißstrahls auf Grundlage der erfassten Schweißbereiche. Ein Materialband oder beide Materialbänder können eine Prägung aufweisen, welche beispielsweise durch Hohlprägen in einer Presse erzeugt wurde. Die Prüfung der Oberflächengeometrie kann ein Erfassen des Höhenprofils oder des Reliefs der Materialbänder umfassen. Das Erfassen der Schweißbereiche erfolgt beispielsweise mittels eines Schweißbereichdetektors. Der Schweißbereichdetektor kann einen oder mehrere Sensoren zur berührungslosen Oberflächenabtastung und/oder eine oder mehrere Kameras aufweisen. Die berührungslose Oberflächenabtastung kann eine Laserabtastung sein. Durch eine Förderbewegung der Materialbänder und/oder durch ein Bewegen und/oder Verschwenken des zumindest einen Schweißstrahls wird dann in den erfassten Schweißbereichen eine Schweißnaht erzeugt, sodass ein beabsichtigtes Schweißnahtmuster realisiert wird.

Darüber hinaus ist ein erfindungsgemäßes Verfahren vorteilhaft, bei welchem die Fördereinrichtung rotatorisch angetriebene und Eingriffselemente aufweisende Förderräder aufweist, wobei die Eingriffselemente zum Fördern der länglichen Materialbänder in Ausnehmungen der Materialbänder eingreifen. Die Eingriffselemente können als Zähne ausgebildet sein oder eine Verzahnung ausbilden. Beispielsweise weist die Fördereinrichtung ein oberes und ein unteres Förderrad auf, wobei die länglichen Materialbänder zwischen dem oberen und dem unteren Förderrad angeordnet sind. Die Materialbänder werden durch eine Rotationsbewegung der Förderräder in Längsrichtung bewegt.

Es ist ferner ein erfindungsgemäßes Verfahren vorteilhaft, bei welchem an der ersten Schweißstation die von dem zumindest einen Schweißstrahl an dem Auftreffpunkt verursachte Materialaufschmelzung an den zueinander gewandten Innenflächen der Materialbänder oberflächlich ist, sodass eine von den Materialbändern eingeschlossene Schweißnaht entsteht. Vorzugsweise weist die von den Materialbändern eingeschlossene Schweißnaht einen linsenförmigen Querschnitt auf. Die Materialaufschmelzung erstreckt sich also nicht durch die gesamte Materialstärke der Materialbänder, sodass die Tiefe des entstehenden Schmelzbades geringer ist als die Materialstärke bzw. Materialdicke der Materialbänder.

In einer weiteren bevorzugten Ausführungsform des erfindungsgemäßen Verfahrens wird die Position, die Geometrie und/oder der Verlauf der erzeugten Schweißnähte während des stoffschlüssigen Fügens und/oder nach dem stoffschlüssigen Fügen mittels einer Prüfsensorik ermittelt. Durch das Ermitteln der Position, der Geometrie und/oder des Verlaufs der erzeugten Schweißnaht während des Fügens kann die Steuerungseinrichtung eine Anpassung des Schweißvorgangs, beispielsweise der Positionierung des Schweißstrahls, veranlassen, um etwaige Abweichungen von der Sollposition, Sollgeometrie und/oder des Sollverlaufs zu korrigieren. Das Ermitteln der Position, der Geometrie und/oder des Verlaufs der erzeugten Schweißnähte während des stoffschlüssigen Fügens kann beispielsweise durch optische Kohärenztomografie erfolgen.

In einer weiteren bevorzugten Ausführungsform des erfindungsgemäßen Verfahrens erfasst die Prüfsensorik zur Ermittlung der Position, der Geometrie und/oder des Verlaufs der erzeugten Schweißnähte die Temperatur einer Oberfläche zumindest eines Materialbandes. Die Prüfsensorik arbeitet also vorzugsweise thermografiebasiert. Die über den zumindest einen Schweißstrahl eingebrachten Schweißnähte können über die Prüfsensorik aufgrund der Wärmestrahlung der Schweißnähte erfasst werden. Zur Erfassung der Oberflächentemperatur kann beispielsweise Infrarot-Thermografie (IR-Thermografie) oder Wärmeflussthermografie eingesetzt werden. Bei der Infrarot-Thermografie kann beispielsweise eine Zeilenkamera eingesetzt werden, um ein Infrarotbild der Oberfläche des Materialbandes zu erzeugen, wobei auf Grundlage des Infrarotbildes eine Prüfung des Schweißnahtmusters erfolgen kann. Bei der Wärmeflussthermografie können beispielsweise eine oder können mehrere Matrix-Thermografiekameras eingesetzt werden.

Es ist ferner ein erfindungsgemäßes Verfahren vorteilhaft, bei welchem das stoffschlüssige Fügen der Materialbänder an der ersten Schweißstation mittels mehrerer Schweißstrahlen erfolgt, welche gleichzeitig in voneinander beabstandeten und in dem Kontaktbereich liegenden Schweißzonen auf die zueinander gewandten Innenflächen der übereinander positionierten Materialbänder treffen und an den jeweiligen Auftreffpunkten eine Materialaufschmelzung an den zueinander gewandten Innenflächen der Materialbänder verursachen. Durch den Einsatz von mehreren Schweißstrahlen können gleichzeitig mehrere in Querrichtung voneinander beabstandete Schweißnähte erzeugt werden. Ferner kann die Erzeugung von in Querrichtung verlaufenden Schweißnähten beschleunigt werden, da die einzelnen Schweißstrahlen unterschiedliche Segmente derartiger Schweißnähte gleichzeitig erzeugen können. Durch den Einsatz von mehreren Schweißstrahlen können somit komplexere Schweißnahtmuster erzeugt werden. Ferner wird der Schweißvorgang weiter beschleunigt.

Die der Erfindung zugrundeliegende Aufgabe wird ferner durch eine Vorrichtung der eingangs genannten Art gelöst, wobei die erfindungsgemäße Vorrichtung eine sensorische Erfassungseinrichtung umfasst, welche dazu eingerichtet ist, innerhalb des Erfassungsbereichs potentielle Schweißbereiche zu erfassen, in welchen die Materialbänder miteinander zu verschweißen sind. Die erfindungsgemäße Vorrichtung umfasst ferner zumindest eine Schweißeinrichtung, welche dazu eingerichtet ist, die Materialbänder miteinander verbindende Schweißnähte in von der Erfassungseinrichtung erfassten potentiellen Schweißbereichen mittels zumindest eines Schweißstrahls zu erzeugen.

In einer bevorzugten Ausführungsform ist die erfindungsgemäße Vorrichtung dazu eingerichtet, das Verfahren zum Verschweißen von zwei länglichen Materialbändern nach einer der vorstehend beschriebenen Ausführungsformen auszuführen. Hinsichtlich der Vorteile und Modifikationen der erfindungsgemäßen Vorrichtung wird somit auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel einer erfindungsgemäßen Vorrichtung während des Verschweißens von zwei Materialbändern in einer schematischen Darstellung;
- Fig. 2: ein weiteres Ausführungsbeispiel einer erfindungsgemäßen Vorrichtung während des Verschweißens von zwei Materialbändern in einer schematischen Darstellung;
- Fig. 3: die Prägung eines mit dem erfindungsgemäßen Verfahren verschweißbaren Materialbandes in einer perspektivischen Darstellung;
- Fig. 4: potentielle Schweißbereiche, in welchen zwei Materialbänder miteinander zu verschweißen sind;
- Fig. 5: einen Schweißbereich, in welchen zwei Materialbänder miteinander verschweißt sind; und
- Fig. 6: ein weiteres Ausführungsbeispiel einer erfindungsgemäßen Vorrichtung während des Verschweißens von zwei Materialbändern in einer schematischen Darstellung.

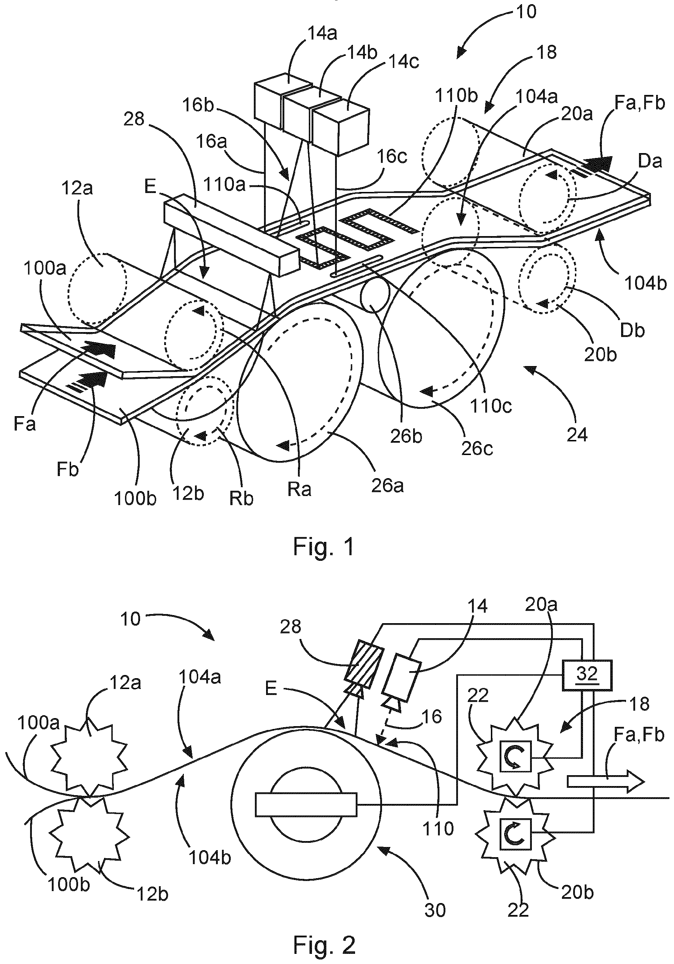

Die Fig. 1 zeigt eine Vorrichtung 10 zum Verschweißen von zwei länglichen Materialbändern 100a, 100b. Die Vorrichtung 10 kann zum Herstellen von Bipolarplatten für Brennstoffzellen verwendet werden. In diesem Fall sind die Materialbänder 100a, 100b vorgeprägte Blechbänder, wobei die Prägung beispielsweise durch Hohlprägen in einer Presse in die Materialbänder 100a, 100b eingebracht wurde. Die Materialbänder 100a, 100b stellen die Halbplatten für die herzustellenden Bipolarplatte zur Verfügung. Das Materialband 100a kann beispielsweise mehrere Halbplatten tragen, welche später als Anode dienen. Das Materialband 100b kann beispielsweise mehrere Halbplatten tragen, welche später als Kathode dienen.

Die Vorrichtung 10 umfasst eine Fördereinrichtung 18, mittels welcher die länglichen Materialbänder 100a, 100b durch einen Erfassungsbereich E gefördert werden. Die Fördereinrichtung 18 umfasst zwei Förderwalzen 20a, 20b. Die Förderwalze 20a steht mit der Außenfläche 104a des Materialbandes 100a in Kontakt und wird durch einen Antrieb rotatorisch angetrieben. Zum Fördern des Materialbandes 100a führt die Förderwalze 20a eine Drehbewegung aus, wobei die Drehrichtung Da der Förderwalze 20a dargestellt ist. Die Förderwalze 20b steht mit der Außenfläche 104b des Materialbandes 100b in Kontakt. Die Förderwalze 20b wird ebenfalls von einem Antrieb rotatorisch angetrieben und führt eine Drehbewegung aus, wobei die Drehrichtung Db der Förderwalze 20b dargestellt ist.

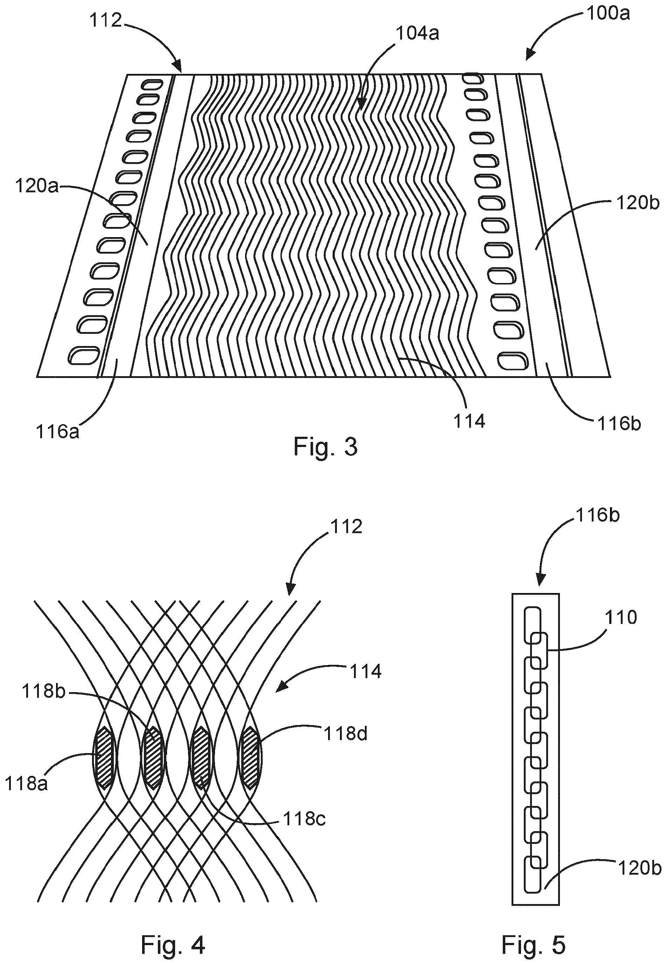

Die Vorrichtung 10 umfasst ferner eine sensorische Erfassungseinrichtung 28, mittels welcher innerhalb des Erfassungsbereichs E potentielle Schweißbereiche 118a-118d, 120a, 120b (vgl. Fig. 3 bis 5) erfasst werden können, wobei die Materialbänder 100a, 100b in den potentiellen Schweißbereichen 118a-118d, 120a, 120b spaltfrei aufeinander liegen und miteinander verschweißt werden sollen. Die Erfassungseinrichtung 28 umfasst eine oder mehrere Kameras, über welche kamerabasiert die Struktur der Oberfläche des Materialbandes 100a ermittelt werden kann. Die eine oder die mehreren Kameras der Erfassungseinrichtung 28 erzeugen Bildaufnahmen der Oberfläche des Materialbandes 100a, sodass die Erfassungseinrichtung 28 die potentiellen Schweißbereiche 118a-118d, 120a, 120b über eine Auswertung der Bildaufnahmen ermitteln kann. Im Nahbereich des Erfassungsbereichs E kann ferner eine Beleuchtungseinrichtung der Vorrichtung 10 angeordnet sein, mittels welcher der Erfassungsbereich E zur Steigerung der Qualität der Bildaufnahmen beleuchtet wird. Durch das Auswerten der Bildaufnahmen kann die Erfassungseinrichtung 28 die Oberflächengeometrie des Materialbandes 100a erfassen. Im Rahmen der Erfassung der Oberflächengeometrie ermittelt die Erfassungseinrichtung 28 ein Höhenprofil oder ein Relief der Oberfläche des Materialbandes 100a. Auf Grundlage einer Mustererkennung kann die Erfassungseinrichtung 28 potentielle Schweißbereiche 118a-118d, 120a, 120b auf Grundlage der erfassten Oberflächengeometrie des Materialbandes 100a erfassen.

Bevor die Materialbänder 100a, 100b den Erfassungsbereich E erreichen, werden diese über die als Umlenkrollen ausgebildeten Umlenkeinrichtungen 12a, 12b umgelenkt. Die als Umlenkrollen ausgebildeten Umlenkeinrichtungen 12a, 12b führen eine Rotationsbewegung aus. Die Rotationsrichtungen Ra, Rb der als Umlenkrollen ausgebildeten Umlenkeinrichtungen 12a, 12b stimmen mit den Drehrichtungen Da, Db der Förderwalzen 20a, 20b überein. Durch die Umlenkung werden die Materialbänder 100a, 100b parallel zueinander ausgerichtet und miteinander in Kontakt gebracht. Die Förderrichtungen Fa, Fb der Materialbänder 100a, 100b stimmt nach der Umlenkung durch die Umlenkeinrichtungen 12a, 12b überein.

Über eine Spannvorrichtung 24 der Vorrichtung 10 werden die Innenflächen 102a, 102b der Materialbänder 100a, 100b aufeinander gedrückt, sodass eine Verspannung der Materialbänder 100a, 100b erfolgt. Die Spannvorrichtung 24 der Vorrichtung 10 umfasst mehrere Spannrollen 26a-26c, welche in Kontakt mit der Außenfläche 104b des Materialbands 100b stehen. Die zuvor durch die Erfassungseinrichtung 28 erfassten Schweißbereiche 118a-118d, 120a, 120b liegen auf Höhe der Spannvorrichtung 24 spaltfrei aufeinander, sodass in den zuvor ermittelten Schweißbereichen 118a-118d, 120a, 120b Schweißnähte 110a-110c erzeugt werden können, welche die Materialbänder 100a, 100b miteinander verbinden. Hierzu weist die Vorrichtung 10 mehrere Schweißeinrichtungen 14a-14c auf. Die Schweißeinrichtungen 14a-14c erzeugen jeweils einen Schweißstrahl 16a-16c. Die Schweißeinrichtungen 14a-14c können Laserschweißeinrichtungen oder Elektronenstrahlschweißeinrichtungen sein. Die Schweißstrahlen 16a-16c können demnach Laserschweißstrahlen oder Elektronenschweißstrahlen sein. Vorliegend umfassen die Schweißeinrichtungen 14a-14c einen Single-Mode-Laser und einen Positionierscanner. Die Schweißstrahlen 16a-16c treffen zumindest temporär im Wesentlichen orthogonal auf die Außenfläche 104a des Materialbandes 100a. Über die Schweißstrahlen 16a-16c erfolgt eine lokale Aufschmelzung der Materialbänder 100a, 100b, sodass Schweißnähte 110a-110c erzeugt werden.

Das Erfassen potentieller Schweißbereiche 118a-118d, 120a, 120b mittels der Erfassungseinrichtung 28 und das Erzeugen der die Materialbänder 100a, 100b miteinander verbindenden Schweißnähte 110a-110c erfolgt kontinuierlich während des Förderns der länglichen Materialbänder 100a, 100b mittels der Fördereinrichtung 18. Bei dem dargestellten Schweißvorgang handelt es sich also um ein Durchlaufverfahren, bei welchem eine selbsttätige Identifikation von Schweißbereichen 118a-118d, 120a, 120b erfolgt. Unter Berücksichtigung der Fördergeschwindigkeit der Materialbänder 100a, 100b kann auf Grundlage der erfassten Schweißbereiche 118a-118d, 120a, 120b eine exakte Positionierung der Schweißstrahlen 16a-16c erfolgen, wodurch hochpräzise und somit qualitativ hochwertige Schweißnähte 110a-110c erzeugt werden. Die Schweißeinrichtungen 14a-14c sind in Querrichtung der Materialbänder 100a, 100b nebeneinander angeordnet.

Die Fördereinrichtung 18, die Erfassungseinrichtung 28 und die Schweißeinrichtungen 14a-14c sind signalleitend mit einer nicht dargestellten Steuerungseinrichtung 32 verbunden. Die Steuerungseinrichtung 32 steuert die Schweißeinrichtungen 14a-14c in Abhängigkeit der Signale der Fördereinrichtung 18 und der Erfassungseinrichtung 28. Das Steuern der Schweißeinrichtungen 14a-14c kann dabei beispielsweise das Einstellen eines Bewegungsmusters oder das Einstellen einer Bewegungsgeschwindigkeit der Schweißstrahlen 16a-16c umfassen. Die Schweißeinrichtungen 14a-14c können in Abhängigkeit der Fördergeschwindigkeit und der Position, Größe und/oder Form der erfassten potentiellen Schweißbereiche 118a-118d, 120a, 120b gesteuert werden.

Die Fig. 2 zeigt eine Vorrichtung 10 zum Verschweißen von Materialbändern 100a, 100b, bei welcher die Fördereinrichtung 18 Förderräder 20a, 20b umfasst, wobei die Förderräder 20a, 20b Eingriffselemente 22 aufweisen. Die Eingriffselemente 22 der Förderräder 20a, 20b greifen in Ausnehmungen der Materialbänder 100a, 100b ein. Die Eingriffselemente 22 können als Zähne ausgebildet sein oder eine Verzahnung ausbilden. Die länglichen Materialbänder 100a, 100b sind zwischen dem oberen Förderrad 20a und dem unteren Förderrad 20b der Fördereinrichtung 18 angeordnet. Die Materialbänder 100a, 100b werden durch eine Rotationsbewegung der Förderräder 20a, 20b in Längsrichtung bewegt. Die Längsrichtung entspricht der Förderrichtungen Fa, Fb der Materialbänder 100a, 100b.

Die Erfassungseinrichtung 28 der Vorrichtung 10 weist eine oder mehrere Wärmebildkameras auf, über welche die Temperatur der Außenfläche 104a des Materialbandes 100a im Erfassungsbereich E erfasst werden kann. Über die Temperaturerfassung werden die potentiellen Schweißbereiche 118a-118d, 120a, 120b, in welchen die Materialbänder 100a, 100b miteinander zu verschweißen sind, erfasst. Vor Erreichen des Erfassungsbereichs E wird über eine Heizeinrichtung 30 der Vorrichtung 10 Wärme in die Materialbänder 100a, 100b eingebracht. In dem dargestellten Ausführungsbeispiel ist die Heizeinrichtung 30 als Wärmewalze ausgebildet, wobei die Oberfläche der Wärmewalze mit dem Materialband 100b in Kontakt steht. In alternativen Ausführungsformen kann der Wärmeeintrag in die Materialbänder 100a, 100b auch kontaktlos erfolgen, beispielsweise durch die Verwendung eines Wärmestrahlers.

Die Erfassung der potentiellen Schweißbereiche 118a-118d, 120a, 120b erfolgt bei der dargestellten Vorrichtung 10 also thermografiebasiert. Die Erfassungseinrichtung 28 führt zur Erfassung der potentiellen Schweißbereiche 118a-118d, 120a, 120b eine Mustererkennung in der Wärmesignatur der Außenseite 104a des Materialbands 100a durch. Hierbei erfasst die Erfassungseinrichtung 28 die Intensität der von der Oberfläche des Materialbandes 100a ausgehenden Infrarotstrahlung und ermittelt daraus dessen Temperatur. Die Temperaturerfassung durch die Erfassungseinrichtung 28 und die Wärmeeinbringung durch die Heizeinrichtung 30 erfolgt von unterschiedlichen Seiten. Vorliegend wird die Wärme über die Heizeinrichtung 30 an der Außenfläche 104b des Materialbandes 100b eingebracht. Die Temperaturerfassung erfolgt auf der Außenfläche 104a des Materialbandes 100a. Die durch die Heizeinrichtung 30 eingebrachte Wärme muss also zunächst durch die Materialbänder 100a, 100b geleitet werden, bevor diese durch die Erfassungseinrichtung 28 erfasst werden kann. In Bereichen, in welchen die Materialbänder 100a, 100b spaltfrei aufeinander liegen, wird die eingebrachte Wärme schneller durch die Materialbänder 100a, 100b geleitet, als in Bereichen, in welchen die Materialbänder 100a, 100b aufgrund ihrer Prägung nicht direkt aufeinander liegen, sondern beabstandet voneinander sind. In den von der Erfassungseinrichtung 28 erfassten warmen Bereichen liegen die Materialbänder 100a, 100b also spaltfrei aufeinander, sodass diese Bereiche die potentiellen Schweißbereiche 118a-118d, 120a, 120b sind. Ein Verschweißen in Bereichen, in welchem die Materialbänder 100a, 100b aufgrund ihrer Prägung beabstandet voneinander sind, würde nicht zu einem Fügen der Materialbänder 100a, 100b führen.

Die Schweißeinrichtung 14 der Vorrichtung 10 ist dazu eingerichtet, die Materialbänder 100a, 100b in den zuvor erfassten potentiellen Schweißbereichen 118a-118d, 120a, 120b miteinander zu verschweißen. Hierzu erzeugt die Schweißeinrichtung 14 einen Schweißstrahl 16, welcher im Wesentlichen orthogonal auf die Außenfläche 104a des Materialbandes 100a trifft. Im Bereich des Auftreffpunktes erzeugt der Schweißstrahl 16 eine Schweißnaht 110.

Das Erfassen der potentiellen Schweißbereiche 118a-118d, 120a, 120b und das Verschweißen der Materialbänder 100a, 100b mittels des Schweißstrahls 16 erfolgt kontinuierlich während des Förderns der länglichen Materialbänder 100a, 100b. Längsnähte bzw. in Längsrichtung der Materialbänder 100a, 100b verlaufende Schweißnähte können beispielsweise dadurch erzeugt werden, dass der Schweißstrahl 16 still steht, sodass der Auftreffpunkt des Schweißstrahls 16 sich nicht verändert. Aufgrund der Förderbewegung der Materialbänder 100a, 100b ergibt sich ein sich in Längsrichtung erstreckender Schweißpfad. Der Schweißstrahl 16 kann ferner während des stoffschlüssigen Fügens der Materialbänder 100a, 100b quer zur Längsachse der Materialbänder 100a, 100b verschwenkt werden. Ein Verschwenken des Schweißstrahls 16 kann beispielsweise durch das Verschwenken oder Verfahren eines Umlenkspiegels der Schweißeinrichtung 14 erfolgen. Alternativ oder zusätzlich können zum Verschwenken des Schweißstrahls 16 auch ein oder mehrere Linsen der Schweißeinrichtung 14 verfahren oder verschwenkt werden. Durch das Verschwenken des Schweißstrahls 16 bewegt sich der Auftreffpunkt des Schweißstrahls 16 quer zur Längsachse der Materialbänder 100a, 100b. Durch die Bewegung des Schweißstrahls 16 in Querrichtung kann bei unterbrochener Materialbandförderung oder bei einer Förderung der Materialbänder 100a, 100b mit einer geringen Fördergeschwindigkeit eine Quernaht, also eine quer zur Längsrichtung der Materialbänder 100a, 100b verlaufende Schweißnaht, erzeugt werden. Eine schräg verlaufende Schweißnaht kann ferner dadurch erzeugt werden, dass der Auftreffpunkt des Schweißstrahls 16 in Querrichtung bewegt wird, währenddessen die Materialbänder 100a, 100b eine Förderbewegung in Förderrichtung Fa, Fb ausführen.

Die Antriebe der Förderräder 20a, 20b, die Erfassungseinrichtung 28 und die Schweißeinrichtung 14 sind signalleitend mit einer Steuerungseinrichtung 32 verbunden. Die Steuerungseinrichtung 32 steuert die Schweißeinrichtung 14 in Abhängigkeit der Signale der Antriebe der Förderräder 20a, 20b und der Signale der Erfassungseinrichtung 28. Ferner steuert die Steuerungseinrichtung 32 auch die Antriebe der Förderräder 20a, 20b in Abhängigkeit der durch die Erfassungseinrichtung 28 erfassten Schweißbereiche 118a-118d, 120a, 120b. Wenn in einem Schweißbereich 118a-118d, 120a, 120b eine Quernaht erzeugt werden soll, wird die Rotationsgeschwindigkeit der Förderräder 20a, 20b durch die Steuerungseinrichtung 32 reduziert oder die Förderung der Materialbänder 100a, 100b wird temporär unterbrochen. Wenn Längsnähte und/oder schräg verlaufende Schweißnähte erzeugt werden sollen, kann die Rotationsgeschwindigkeit der Förderräder 20a, 20b durch die Steuerungseinrichtung 32 zur Steigerung der Fördergeschwindigkeiten Fa, Fb der Materialbänder 100a, 100b erhöht werden.

Die Erfassungseinrichtung 28 ist in der Lage, auf Basis der erfassten Wärmesignatur der Außenfläche 104a des Materialbandes 100a die Positionen, Formen und Größen der potentiellen Schweißbereiche 118a-118d, 120a, 120b zu erfassen. Bei den potentiellen Schweißbereichen 118a-118d, 120a, 120b handelt es sich um die Bereiche, in welchen die Materialbänder 100a, 100b spaltfrei zueinander positioniert sind. Die Schweißeinrichtung 14 erzeugt die die Materialbänder miteinander verbindenden Schweißnähte in Abhängigkeit der von der Erfassungseinrichtung 28 erfassten Positionen, Formen und Größen der potentiellen Schweißbereiche 118a-118d, 120a, 120b. Auf Grundlage der erfassten Positionen der potentiellen Schweißbereiche 118a-118d, 120a, 120b kann eine exakte Positionierung des Schweißstrahls 16 bzw. des Auftreffpunkts des Schweißstrahls 16 erfolgen. Ferner kann die Steuerungseinrichtung 32 in Abhängigkeit der erfassten Position, Größe und/oder Form des potentiellen Schweißbereichs selbsttätig einen Schweißnahtverlauf oder ein Schweißnahtmuster für die in den jeweiligen Schweißbereichen 118a-118d, 120a, 120b zu erzeugenden Schweißnähte festlegen. Somit kommt es zu einer adaptiven Auswahl einer geeigneten Schweißnahtkontur in Abhängigkeit der Eigenschaften der erfassten Schweißbereiche 118a-118d, 120a, 120b.

Die Fig. 3 zeigt die Außenfläche 104a eines Materialbandes 100a. Das Materialband 100a weist eine Prägung 112 auf. Durch die Prägung ergibt sich ein spezifisches Höhenprofil oder Relief. Die Prägung 112 weist einen wellenförmigen Bereich auf, in welchem mehrere parallel zueinander verlaufende Wellen 114 in das Materialband 100a eingeprägt sind. Das mit dem dargestellten Materialband 100a zu fügende zweite Materialband 100b weist ebenfalls eine derartige Wellenprägung auf, wobei der Wellenverlauf in Längsrichtung versetzt ist. Durch die versetzte Wellenprägung ergeben sich innerhalb des Wellenfeldes die in der Fig. 4 dargestellten Kontaktbereiche, in welchen die Materialbänder 100a, 100b spaltfrei aufeinanderliegen. Die Bereiche, in welchen die Materialbänder 100a, 100b spaltfrei aufeinanderliegen, sind die potentiellen Schweißbereiche 118a-118d, in welchen die Materialbänder 100a, 100b miteinander gefügt werden sollen. Aufgrund der spaltfreien Anordnung der Materialbänder 100a, 100b sind die Schweißbereiche 118a-118d fügefähig.

In der Fig. 3 ist außerdem dargestellt, dass die Prägung 112 des Materialbandes 100a zwei außenliegende Längsnuten 116a, 116b aufweist, wobei sich die Längsnuten 116a, 116b in Längsrichtung des Materialbandes 100a erstrecken.

Das mit dem Materialband 100a zu fügende Materialband 100b weist ebenfalls entsprechende Längsnuten auf, sodass die Materialbänder 100a, 100b im Bereich der Längsnuten 116a, 116b spaltfrei aufeinander liegen. Somit stellen auch die Längsnutenbereiche 116a, 116b potentielle Schweißbereiche 120a, 120b dar, da die spaltfreie Anordnung in diesen Bereichen ein Verschweißen der Materialbänder 100a, 100b erlaubt.

Die Fig. 5 zeigt eine in dem Schweißbereich 120b erzeugte Schweißnaht 110. Die Schweißnaht 110 weist mehrere sich überlappende kringelförmige Schweißnahtverläufe auf. Aufgrund der Überlappung der kringelförmigen Schweißnahtverläufe wird eine fluiddichte Dichtnaht erzeugt, ohne dass ein durchgängiger Schweißvorgang im Bereich der Längsnut 116b erforderlich ist. Durch die sich überlappenden kringelförmigen Schweißnähte wird der Wärmeeintrag während des Schweißvorgangs erheblich reduziert, sodass eine qualitativ hochwertige Schweißverbindung erreicht werden kann. Alternativ zu den kringelförmigen Schweißnahtverläufen können auch andere offene oder geschlossene Schweißnahtmuster erzeugt werden. In den in der Fig. 4 dargestellten Schweißbereichen 118a-118d können beispielsweise in sich verschlungene Schweißnahtverläufe umgesetzt werden, welche beispielsweise einer Brezelform oder einem Notenschlüssel ähneln.

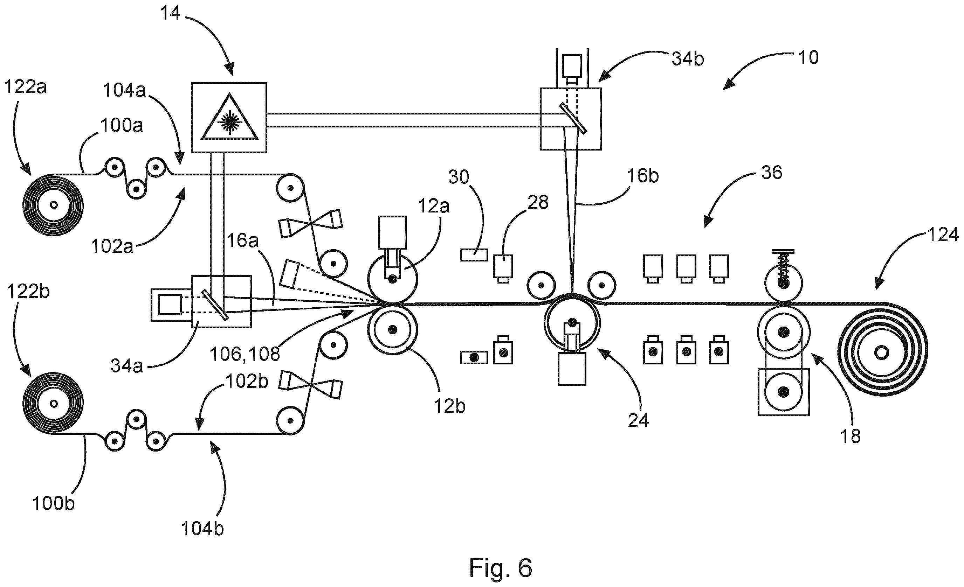

Die Fig. 6 zeigt eine Vorrichtung 10 mit zwei voneinander beabstandeten Schweißstationen, bei welcher zwei Schweißkonzepte miteinander kombiniert werden, um zwei Materialbänder 100a, 100b miteinander zu verschweißen. Die Materialbänder 100a, 100b werden von Materialtrommeln 122a, 122b abgerollt. Die länglichen Materialbänder 100a, 100b werden mittels einer Fördereinrichtung 18 der Vorrichtung 10 gefördert. Die länglichen Materialbänder 100a, 100b werden mittels einer Umlenkeinrichtung 12a, 12b während des Förderns umgelenkt, um die länglichen Materialbänder 100a, 100b übereinander zu positionieren. Die zueinander gewandten Innenflächen 102a, 102b der Materialbänder 100a, 100b werden durch das Umlenken der Materialbänder 100a, 100b in einem Kontaktbereich 106 in Kontakt miteinander gebracht. In einer in dem Kontaktbereich 106 liegenden Schweißzone 108 trifft ein Schweißstrahl 16a auf die zueinander gewandten Innenflächen 102a, 102b der übereinander positionierten Materialbänder 100a, 100b. An dem Auftreffpunkt verursacht der Schweißstrahl 16a eine Materialaufschmelzung an den zueinander gewandten Innenflächen 102a, 102b der Materialbänder 100a, 100b, sodass es zum stoffschlüssigen Fügen der Materialbänder 100a, 100b kommt. Der Schweißstrahl 16a wird von einer Schweißeinrichtung 14 erzeugt und über einen Spiegel 34a in die Schweißzone 108 umgelenkt. Die Materialbänder 100a, 100b werden während des stoffschlüssigen Fügens mittels des Schweißstrahls 16a durch die Fördereinrichtung 18 in Richtung ihrer Längsachse bewegt. Zum Erzeugen einer geeigneten Schweißnaht kann der Schweißstrahl 16a während des stoffschlüssigen Fügens quer zur Längsachse der Materialbänder 100a, 100b bewegt und/oder verschwenkt werden. Dies kann beispielsweise über ein Bewegen oder Verschwenken des Spiegels 34a erfolgen. Die Fördereinrichtung 18 fördert die Materialbänder 100a, 100b während des Fügens mit einer Bandgeschwindigkeit, wobei eine Steuerungseinrichtung das Bewegen und/oder Verschwenken des Schweißstrahls 16a in Abhängigkeit der Bandgeschwindigkeit steuert. Die von dem Schweißstrahl 16a an dem Auftreffpunkt verursachte Materialaufschmelzung an den zueinander gewandten Innenflächen 102a, 102b der Materialbänder 100a, 100b ist oberflächlich, sodass eine von den Materialbändern 100a, 100b eingeschlossene Schweißnaht entsteht.

Hinter den als Umlenkwalzen ausgebildeten Umlenkeinrichtungen 12a, 12b ist eine Heizeinrichtung 30 angeordnet, über welche Wärme in die Materialbänder 100a, 100b eingebracht wird. Die Heizeinrichtung 30 ist vorliegend eine berührungslos arbeitende Strahlungsheizung. Hinter der Heizeinrichtung 30 ist eine Erfassungseinrichtung 28 angeordnet, welche auf Grundlage der Wärmesignatur der Materialbänder 100a, 100b weitere Schweißbereiche 118a-118d, 120a, 120b erfasst, in welchen die Materialbänder 100a, 100b miteinander zu verschweißen sind. Die Schweißnahterzeugung in den erfassten Schweißbereichen 118a-118d, 120a, 120b erfolgt über den Schweißstrahl 16b, welcher auf die Oberfläche 104a des Materialbands 100a auftrifft. Der Auftreffpunkt des Schweißstrahls 16 liegt im Bereich einer Spannvorrichtung 24, welche über Spannrollen, die zueinander gewandten Innenflächen 102a, 102b der Materialbänder 100a, 100b aufeinander drücken und die Materialbänder 100a, 100b auf diese Weise miteinander verspannen. Der Schweißstrahl 16b wird ebenfalls durch die Schweißeinrichtung 14 erzeugt, wobei der Schweißstrahl 16b über den Spiegel 34b umgelenkt wird. Über eine geeignete Spiegelansteuerung kann der Spiegel 34b bewegt und/oder verschwenkt werden, sodass mittels des Schweißstrahls 16b Längsnähte, Quernähte und/oder schräg verlaufende Schweißnähte erzeugt werden können.

Hinter der Schweißstation, in welcher die Materialbänder 110a, 110b mittels des Schweißstrahls 16b verschweißt werden, befindet sich eine Prüfeinrichtung 36. Die Prüfeinrichtung 36 überwacht die Position, die Geometrie und den Verlauf der erzeugten Schweißnähte. Wenn die Prüfeinrichtung 36 Abweichungen von einem beabsichtigen Schweißergebnis feststellt, kann diese selbsttätig eine Anpassung des Schweißvorgangs veranlassen, um Abweichungen der Schweißnahtposition von einer Soll-Position, Abweichungen der Schweißnahtgeometrie von einer Soll-Geometrie und/oder Abweichungen des Schweißnahtverlaufs von einem Soll-Verlauf zu korrigieren. Das Ermitteln der Position, der Geometrie und/oder des Verlaufs der erzeugten Schweißnähte kann beispielsweise thermografiebasiert, kamerabasiert und/oder mittels optischer Kohärenztomografie erfolgen. Nach abgeschlossener Prüfung der erzeugten Schweißnähte werden die miteinander gefügten Materialbänder 100a, 100b auf die Materialtrommel 124 aufgerollt.

Die Schweißeinrichtung 14 kann eine Laserschweißeinrichtung oder Elektronenstrahlschweißeinrichtung sein. Die Schweißstrahlen 16a, 16b können demnach Laserschweißstrahlen oder Elektronenschweißstrahlen sein.

### Bezugszeichen

- 10: Vorrichtung
- 12a, 12b: Umlenkeinrichtungen
- 14, 14a-14c: Schweißeinrichtungen
- 16, 16a-16c: Schweißstrahlen
- 18: Fördereinrichtung
- 20a, 20b: Förderwalzen, Förderräder
- 22: Eingriffselemente
- 24: Spannvorrichtung
- 26a-26c: Spannrollen
- 28: Erfassungseinrichtung
- 30: Heizeinrichtung
- 32: Steuerungseinrichtung
- 34a, 34b: Spiegel
- 36: Prüfeinrichtung

- 100a, 100b: Materialbänder
- 102a, 102b: Innenflächen
- 104a, 104b: Außenflächen
- 106: Kontaktbereich
- 108, 108a-108c: Schweißzonen
- 110, 110a-110c: Schweißnähte
- 112: Prägung
- 114: Wellen
- 116a, 116b: Längsnuten
- 118a-118d: Schweißbereiche
- 120a, 120b: Schweißbereiche
- 122a, 122b: Materialtrommeln
- 124: Materialtrommel

- Fa, Fb: Förderrichtungen
- Da, Db: Drehrichtungen
- E: Erfassungsbereich
- Ra, Rb: Rotationsrichtungen

## Patentansprüche

1. Verfahren zum Verschweißen von zwei länglichen Materialbändern (100a, 100b), insbesondere zur Herstellung von Bipolarplatten für Brennstoffzellen, mit dem Schritt:
- Fördern der länglichen Materialbänder (100a, 100b) mittels einer Fördereinrichtung (18) durch einen Erfassungsbereich (E),
**gekennzeichnet durch** die Schritte:
- Erfassen potentieller Schweißbereiche (118a-118d, 120a, 120b), in welchen die Materialbänder (100a, 100b) miteinander zu verschweißen sind, wobei das Erfassen der potentiellen Schweißbereiche (118a-118d, 120a, 120b) innerhalb des Erfassungsbereichs (E) und mittels einer sensorischen Erfassungseinrichtung (28) erfolgt; und
- Erzeugen von die Materialbänder (100a, 100b) miteinander verbindenden Schweißnähten (110, 110a-110c) in von der Erfassungseinrichtung (28) erfassten potentiellen Schweißbereichen (118a-118d, 120a, 120b) mittels zumindest eines von einer Schweißeinrichtung (14, 14a-14c) erzeugten Schweißstrahls (16, 16a-16c).

2. Verfahren nach Anspruch 1,
**dadurch gekennzeichnet, dass** das Erfassen potentieller Schweißbereiche (118a-118d, 120a, 120b) und/oder das Erzeugen der die Materialbänder (100a, 100b) miteinander verbindenden Schweißnähte (110, 110a-110c) kontinuierlich während des Förderns der länglichen Materialbänder (100a, 100b) erfolgt.

3. Verfahren nach Anspruch 1 oder 2,
**dadurch gekennzeichnet, dass** die Fördereinrichtung (18), die Erfassungseinrichtung (28) und/oder die Schweißeinrichtung (14, 14a-14c) signalleitend mit einer Steuerungseinrichtung (32) verbunden sind, wobei die Steuerungseinrichtung (32) die Schweißeinrichtung (14, 14a-14c) vorzugsweise in Abhängigkeit der Signale der Fördereinrichtung (18) und/oder der Erfassungseinrichtung (28) steuert.

4. Verfahren nach einem der vorstehenden Ansprüche,
**dadurch gekennzeichnet, dass** die Erfassungseinrichtung (28) die Positionen, die Formen und/oder die Größen der potentiellen Schweißbereiche (118a-118d, 120a, 120b) erfasst, wobei die Schweißeinrichtung (14, 14a-14c) die die Materialbänder (100a, 100b) miteinander verbindenden Schweißnähte (110, 110a-110c) vorzugsweise in Abhängigkeit der von der Erfassungseinrichtung (28) erfassten Positionen, Formen und/oder Größen der potentiellen Schweißbereiche (118a-118d, 120a, 120b) erzeugt.

5. Verfahren nach einem der vorstehenden Ansprüche,
**dadurch gekennzeichnet, dass** die Erfassungseinrichtung (28) den Kontaktzustand zwischen den Materialbändern (100a, 100b) in den potentiellen Schweißbereichen (118a-118d, 120a, 120b) erfasst und die Schweißeinrichtung (14, 14a-14c) die Erzeugung von Schweißnähten (110, 110a-110c) in potentiellen Schweißbereichen (118a-118d, 120a, 120b) auslässt, in welchen der erfasste Kontaktzustand zwischen den Materialbändern (100a, 100b) außerhalb eines Toleranzbereichs liegt.

6. Verfahren nach Anspruch 5,
**dadurch gekennzeichnet, dass** eine Steuerungseinrichtung (32) beim Auslassen einer Schweißnahterzeugung in potentiellen Schweißbereichen (118a-118d, 120a, 120b), insbesondere anhand der Position des potentiellen Schweißbereichs (118a-118d, 120a, 120b), beurteilt, ob eine nachträgliche Erzeugung einer Schweißnaht (110, 110a-110c) in dem potentiellen Schweißbereich (118a-118d, 120a, 120b) möglich und/oder erforderlich ist.

7. Verfahren nach einem der vorstehenden Ansprüche,
**dadurch gekennzeichnet**, die Erfassungseinrichtung (28) zum Erfassen potentieller Schweißbereiche (118a-118d, 120a, 120b) die Temperatur einer Oberfläche zumindest eines Materialbandes (100a, 100b) ermittelt.

8. Verfahren nach einem der vorstehenden Ansprüche,
**dadurch gekennzeichnet, dass** vor dem Erfassungsbereich (E) der Erfassungseinrichtung (28) ein Wärmeeintrag in die Materialbänder (100a, 100b) erfolgt.

9. Verfahren nach einem der vorstehenden Ansprüche,
**dadurch gekennzeichnet, dass** die Erfassungseinrichtung (28) zum Erfassen potentieller Schweißbereiche (118a-118d, 120a, 120b) kamerabasiert die Struktur einer Oberfläche zumindest eines Materialbandes (100a, 100b) ermittelt.

10. Verfahren nach Anspruch 9,
**dadurch gekennzeichnet, dass** die Erfassungseinrichtung (28) zum Erfassen potentieller Schweißbereiche (118a-118d, 120a, 120b) Bildaufnahmen der Oberfläche zumindest eines Materialbandes (100a, 100b) auswertet.

11. Verfahren nach einem der vorstehenden Ansprüche,
**dadurch gekennzeichnet, dass** die Materialbänder (100a, 100b) vorgeprägte Blechbänder sind.

12. Verfahren nach einem der vorstehenden Ansprüche,
**dadurch gekennzeichnet, dass** der zumindest eine von der Schweißeinrichtung (14, 14a-14c) erzeugte Schweißstrahl (16, 16a-16c) zumindest temporär orthogonal auf die Oberfläche zumindest eines Materialbandes (100a, 100b) trifft.

13. Verfahren nach einem der vorstehenden Ansprüche,
**dadurch gekennzeichnet, dass** die erzeugten Schweißnähte (110, 110a-110c) sich überlappende und/oder sich kreuzende Schweißnahtverläufe umfassen.

14. Vorrichtung (10) zum Verschweißen von zwei länglichen Materialbändern (100a, 100b), insbesondere zur Herstellung von Bipolarplatten für Brennstoffzellen, mit:
- einer Fördereinrichtung (18) zum Fördern der länglichen Materialbänder (100a, 100b) durch einen Erfassungsbereich (E),
**gekennzeichnet durch**:
- eine sensorische Erfassungseinrichtung (28), welche dazu eingerichtet ist, innerhalb des Erfassungsbereichs (E) potentielle Schweißbereiche (118a-118d, 120a, 120b) zu erfassen, in welchen die Materialbänder (100a, 100b) miteinander zu verschweißen sind, und
- zumindest eine Schweißeinrichtung (14, 14a-14c), welche dazu eingerichtet ist, die Materialbänder (100a, 100b) miteinander verbindende Schweißnähte (110, 110a-110c) in von der Erfassungseinrichtung (28) erfassten potentiellen Schweißbereichen (118a-118d, 120a, 120b) mittels zumindest eines Schweißstrahls (16, 16a-16c) zu erzeugen.

15. Vorrichtung (10) nach Anspruch 14,
**dadurch gekennzeichnet, dass** die Vorrichtung (10) dazu eingerichtet ist, das Verfahren zum Verschweißen von zwei länglichen Materialbändern (100a, 100b) nach einem Ansprüche 1 bis 13 auszuführen.
